# FASCICULE DE BREVET EUROPEEN

(11) **EP 0 935 399 B1**
(45) Date de publication et mention de la délivrance du brevet: **05.10.2005**
(21) Numéro de dépôt: 99400131.1
(22) Date de dépôt: 21.01.1999
(51) Int. Cl.: H04Q 7/18

(54) **Système d'alimentation optimisée pour circuit électronique**
Optimierte Stromversorgung für elektronische Schaltung
An optimised power supply system for electronic circuit

(30) Priorité: 05.02.1998 FR 9801334
(43) Date de publication de la demande: 11.08.1999
(73) Titulaire: ALCATEL, 75008 Paris (FR)
(72) Inventeur: Attimont, Luc, 78560 Le Port Marly (FR); Addra, Modeste, 92800 Puteaux (FR)
(74) Mandataire: Lamoureux, Bernard

(56) Documents cités:
- EP-A- 0 032 598
- EP-A- 0 376 665
- EP-A- 0 740 481
- US-A- 4 340 973
- US-A- 4 384 361
- US-A- 4 652 875
- US-A- 4 691 382
- US-A- 5 191 278
- US-A- 5 218 705
- US-A- 5 384 564
- US-A- 5 625 278
- US-A- 5 629 609
- US-A- 5 686 821

## Description

La présente invention concerne un système d'alimentation optimisée pour circuit électronique.

Un système de ce type est déjà connu, par exemple, par le brevet US-5,218,705. Le circuit électronique dont il s'agit est compris dans un appareil récepteur de messages d'appel de personne communément appelé "pager", d'après la terminologie anglo-saxonne. La tension d'alimentation des circuits électroniques de ce "pager" est fournie par un convertisseur de tension continu-continu variable, à partir d'une pile ou d'une batterie rechargeable. Pour économiser l'énergie, donc augmenter l'autonomie du "pager", ou réduire le prix de la batterie, la tension d'alimentation est ajustée à une valeur de fonctionnement. Cette valeur de fonctionnement est déterminée à l'initialisation du fonctionnement du "pager" en tenant compte du débit de données que le "pager" doit recevoir et ne peut être inférieure à une tension minimale de fonctionnement. Cette tension minimale de fonctionnement est elle aussi déterminée à l'initialisation du fonctionnement du "pager", par des essais au cours desquels la tension est progressivement réduite, tant que les circuits électroniques fonctionnent correctement, puis on mémorise la tension la plus basse ainsi définie et on ajuste le fonctionnement du convertisseur de tension en conséquence.

Le réglage de la tension d'alimentation est ainsi effectué à partir d'essais, qui ont lieu à la mise en marche du terminal. Ensuite ce réglage n'est plus modifié jusqu'à un arrêt du fonctionnement de l'appareil.

Les mêmes dispositions seraient bien sûr applicables dans tout appareil portable comprenant un circuit électronique et une alimentation de ce circuit électronique à partir d'une pile ou d'une batterie, afin d'en augmenter l'autonomie ou d'employer une source de moindre capacité, donc moins onéreuse. Elles sont toutefois particulièrement intéressantes, de manière générale, dans les appareils de communication portables.

L'invention part d'une constatation qui est que ce type d'appareil est souvent mis en fonctionnement par son utilisateur à domicile, au moment du départ, ou dans un véhicule. Il reste ensuite en fonctionnement alors que l'utilisateur se déplace, et c'est d'ailleurs là qu'il a toute son utilité, pour permettre de le joindre ou lui permettre de communiquer à distance de toute installation fixe. Or, les conditions d'environnement de l'appareil peuvent changer considérablement, entre le moment de sa mise en fonctionnement et le moment de son utilisation effective.

Par exemple, en hiver, initialement dans un local chauffé à 20°, l'appareil peut se retrouver à l'air libre à une température de -10°. Le refroidissement des circuits électroniques peut ralentir leur vitesse de fonctionnement, en fonction de la technologie utilisée, tout comme la réduction de la tension d'alimentation. Donc, dans de telles conditions, si la tension d'alimention du "pager" était réellement minimale, le refroissement de l'appareil pourrait le rendre incapable de recevoir correctement un message. L'application du système connu demande donc de prévoir des marges, pour pouvoir faire face à de telles conditions d'environnement. La conséquence est que le réglage de la tension d'alimentation n'est pas réellement optimal.

On peut aussi considérer le cas inverse, en été, de l'appareil initalement dans un local rafraichi, puis porté ensuite au soleil et au contact du corps de l'utilisateur, dont la température peut donc passer de 20^{c} à 40^{c}. Le réglage de la tension d'alimentation n'est pas optimal là non plus.

La présente invention vise donc a fournir une solution meilleure, tendant mieux que la solution de l'art antérieur, vers un ajustement optimal de la tension d'alimentation, afin d'économiser l'énergie, pour augmenter l'autonomie de l'appareil, ou réduire le prix de sa batterie.

Dans ce but, la présente invention a pour objet un système d'alimentation optimisée tel que défini dans les revendications 1 à 5.

Les différents objets et caractéristiques de l'invention apparaîtront plus clairement à la lumière de la description qui va suivre d'exemples de réalisation de l'invention, faite en se référant aux figures annexées qui représentent:
- la figure 1, le diagramme général d'un appareil incorporant la présente invention,
- la figure 2, une première forme de réalisation des moyens d'évaluation de l'appareil de la figure 1,
- la figure 3, une deuxième forme de réalisation des moyens d'évaluation de l'appareil de la figure 1,
- la figure 4, une troisième forme de réalisation des moyens d'évaluation de l'appareil de la figure 1,
- la figure 5, une quatrième forme de réalisation des moyens d'évaluation de l'appareil de la figure 1.

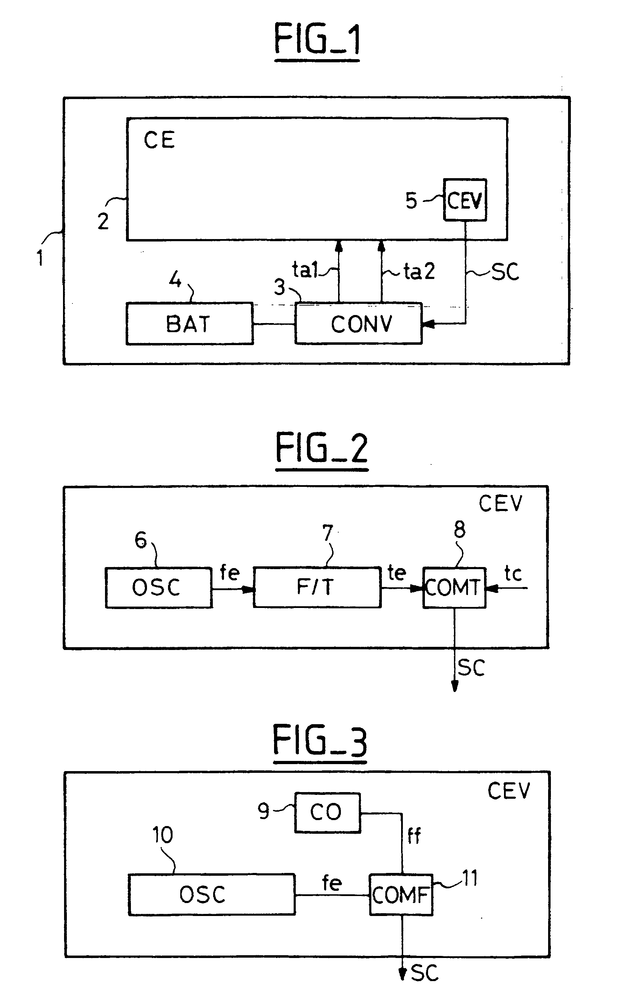

Le diagramme général de la figure 1 représente un appareil portable 1, qui peut être, par exemple, un radiotéléphone, comprenant essentiellement un circuit électronique 2, dénommé CE, lequel est alimenté par convertisseur de tension d'alimentation continu-continu 3, dénommé CONV, à partir d'une source d'énergie 4 qui sera classiquement une batterie rechargeable BAT. Le convertisseur CONV fournit au moins une tension d'alimentation continue ta1, mais peut fournir au moins une deuxième tension d'alimentation ta2.

A côté du circuit électronique CE, on n'a pas fait figurer les dispositifs d'interface homme-machine, écran, clavier, etc., que l'on trouve presque toujours sur les appareils électroniques portables et dont l'alimentation pose des problèmes spécifiques dont il ne sera pas question ici.

Le circuit électronique CE, avec la technique courante peut être réalisé sous la forme d'un circuit intégré, comprenant une ou plusieurs puces de matériau semi-conducteur. L'invention s'applique quel que soit le cas.

Selon l'invention, il est en outre prévu des moyens d'évaluation électroniques (5), dénommés CEV, au sein du circuit électronique CE , agencés de manière à fournir une indication sc des conditions de fonctionnement du circuit électronique CE, laquelle est utilisée pour ajuster la tension d'alimentation ta 1 jusqu'à une valeur minimale qui permette encore un fonctionnement correct dudit circuit électronique CE.

L'indication sc est un signal électrique, une tension par exemple, qui peut avoir deux valeurs (ou plus), chaque valeur prescrivant une évolution de la tension d'alimentation ta1 (et ta2). Par exemple, si le signal sc est de tension positive (au-dessus d'une seuil donné), la tension ta 1 doit être accrue d'une quantité élémentaire déterminée. Si le signal sc est de tension négative (au-dessous d'un autre seuil donné), la tension ta1 doit être diminuée d'une même quantité élémentaire. Entre les deux valeurs de seuil mentionnées, le signal sc n'a pas d'influence.

Le signal sc permet ainsi d'ajuster la tension d'alimentation. Les conditions dans lesquelles il est fourni permettront de l'ajuster, comme indiqué plus haut, à une valeur minimale qui permette encore un fonctionnement correct dudit circuit électronique CE. Il faut pour cela considérer le mode de réalisation des moyens d'évaluation électroniques CEV.

Ces moyens d'évaluation CEV sont dits électroniques parce qu'ils doivent être sensibles aux mêmes conditions d'environnement que le circuit CE, et sensiblement de la même manière, et être aussi sensibles à la tension d'alimentation, mais seulement d'une façon qui permette l'ajustement de la tension à une valeur minimale, par exemple dans une boucle d'asservissement.

On va dans ce qui suit en donner plusieurs exemples, en se référant aux figures 2 à 5 dans lesquelles les mêmes éléments conservent les mêmes références, afin d'en faire ressortir analogies et différences.

La figure 2 représente le diagramme d'une première forme de réalisation des moyens d'évaluation CEV de l'appareil de la figure 1, dans laquelle on trouve un oscillateur 6, dénommé OSC, fournissant un signal de fréquence fe à un convertisseur fréquence/tension 7, dénommé F/T, lequel fournit un signal de tension d'évaluation te à un comparateur de tension 8, dénommé COMT, qui reçoit par ailleurs une tension de consigne tc. Ce comparateur COMT fournit le signal sc pour l'ajustement de la tension d'alimentation comme indiqué dans la description relative à la figure 1.

Tous les circuits des moyens d'évaluation CEV doivent de préférence être réalisés dans la même technologie que le circuit électronique CE, pour avoir le même comportement, à la fois devant les conditions d'environnement et devant les différentes valeurs de la tension d'alimentation. Lorsque le circuit CE est essentiellement un circuit intégré, les moyens CEV sont avantageusement intégrés dans la même puce.

L'oscillateur OSC peut être une simple boucle de portes identiques, en nombre impair. Sa fréquence d'oscillation naturelle dépendra du temps de transit d'un porte et sera une représentation des conditions de fonctionnement de l'ensemble du circuit CE.

Le convertisseur fréquence/tension FT peut être essentiellement un intégrateur linéaire intégrant des impulsions de surface amplitude-durée constante à la fréquence du signal fe et fournissant ainsi un signal te de tension proportionnelle à leur fréquence.

Le comparateur COMT reçoit ce signal te et aussi une tension prédéfinie tc, pour fournir un signal sc égal à la différence tc - te. On voit que si la fréquence est faible, te peut être inférieure à tc et la différence tc-te positive, ce qui, comme on l'a indiqué précédemment peut causer une augmentation de la tension d'alimentation ayant pour effet d'augmenter la fréquence. A l'opposé, si la fréquence est élevée, te peut être supérieure à tc, tc - te négatif et le signal sc causera une diminution de la tension d'alimentation du circuit CE, ayant pour effet de diminuer la fréquence. On se trouve ainsi en présence d'un asservissement de la tension d'alimentation tel que la fréquence de fonctionnement du circuit CE soit maintenue à une valeur qui est définie par la consigne tc, valeur minimale qui permette encore un fonctionnement correct du circuit électronique CE.

La figure 3 représente en fait une variante des moyens d'évaluation CEV de la figure 2, dans laquelle, un oscillateur 9, dénommé CO, fournissant une fréquence stable ff, étant déjà disponible dans le circuit électronique CE, la fréquence fe d'un oscillateur OSC 10 est comparée à cette fréquence stable ff dans un comparateur de fréquence COMF 11, lequel fournit directement le signal sc.

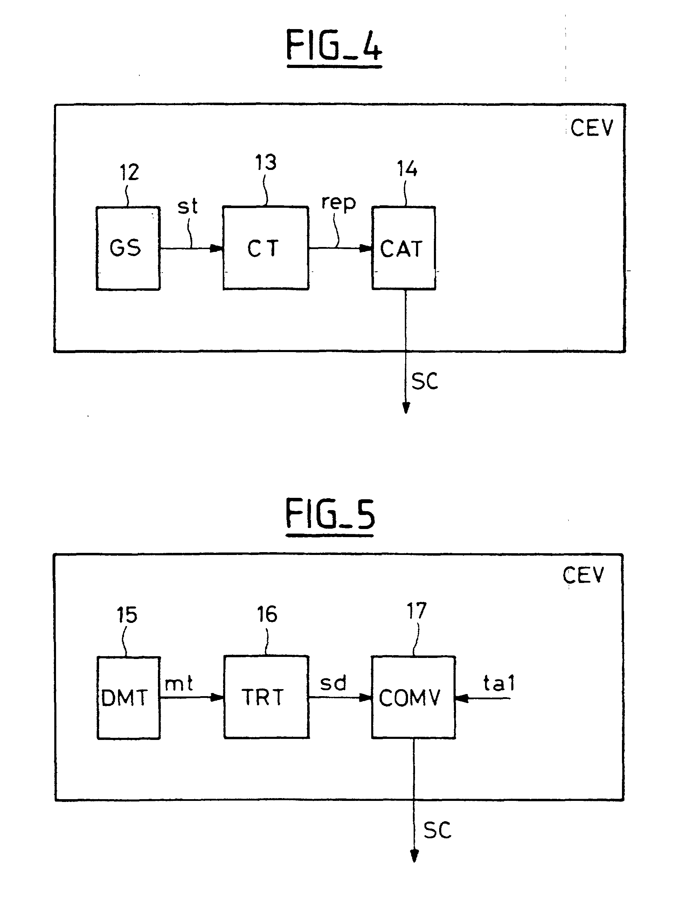

La figure 4 représente un autre mode de réalisation des moyens d'évaluation CEV de la figure 1 comprenant un générateur de stimuli 12, dénommé GS, lequel fournit cycliquement des combinaisons de signaux st qui sont appliqués à un ensemble de circuits testés 13, dénommés CT, lesquels en réponse fournissent des signaux de réponse rep transmis à un circuit d'évaluation de réponse 14, dénommé CAT, lequel fournit en échange le signal sc. Le générateur de stimuli GS peut être une mémoire lue périodiquement, pendant des intervalles de repos du circuit CE. Les combinaisons de signaux sont appliquées à des circuits testés qui sont soit un sous-ensemble du circuit CE, soit un circuit de test dédié, comprenant circuits de commutation, mémoires, etc., constituant une représentation du circuit CE, et dont la réponse rep, c'est-à-dire les signaux obtenus en échange des stimuli st, est évaluée, c'est-à-dire, par exemple, comparée à une réponse attendue, de manière à produire un signal sc qui soit une évaluation du fonctionnement du circuit CE conformément à ce qui est indiqué plus haut à propos des figures 1 à 3.

La figure 5 représente enfin une forme de réalisation des moyens d'évaluation CEV de la figure 1 comprenant un dispositif de mesure ou capteur de température 15, dénommé DMT, lequel fournit une indication de température mt à un table de réponse en température 16, dénommée TRT, laquelle fournit un signal sd.

Les capteurs de température sont connus de l'homme de métier. La mesure de température mt est une valeur numérique. La table TT est remplie à la suite d'un cycle d'essais qui indique pour chaque température sd du circuit CE quelle doit être la tension d'alimentation fournie au circuit CE. Le signal sd fournit cette indication. Pour être homogène avec ce qui précède, la figure 5 représente encore un comparateur de tension d'alimentation 17, dénommé COMV, recevant par ailleurs la tension ta1 et qui fournit le signal de commande sc, dans les conditions dont on a déjà discuté plus haut. Mais il est bien évident que le signal sd pourrait être transmis directement à un convertisseur d'alimentation tel que CONV (figure 1), mais aménagé pour répondre directement à un signal sd indiquant un niveau de tension d'alimentation, en fournissant en réponse une tension d'alimentation ta1, ta2 ayant ce niveau.

## Revendications

1. Système d'alimentation optimisée pour circuit électronique dont la tension d'alimentation est fournie par un convertisseur de tension continu-continu variable, à partir d'une pile ou d'une batterie rechargeable, **caractérisé en ce que** des moyens d'évaluation électroniques sont prévus au sein du circuit électronique, de manière à fournir, durant le fonctionnement du circuit électronique, une indication des conditions de fonctionnement du circuit électronique, laquelle est utilisée pour ajuster la tension d'alimentation jusqu'à une valeur minimale qui permette encore un fonctionnement correct dudit circuit électronique.

2. Système d'alimentation conforme à la revendication 1, **caractérisé en ce que** lesdits moyens d'évaluation électroniques comprennent un oscillateur (OSC) dont la fréquence de fonctionnement (fe) fournit ladite indication.

3. Système d'alimentation conforme à la revendication 2, **caractérisé en ce que** ladite fréquence est ensuite convertie en un signal de tension correspondante (te), lequel est comparé à une valeur de consigne (tc) qui est aussi une tension, le résultat de ladite comparaison (sc) étant utilisé pour ajuster la tension d'alimentation (ta1) jusqu'à une valeur minimale qui permette encore un fonctionnement correct dudit circuit électronique.

4. Système d'alimentation conforme à la revendication 1, **caractérisé en ce que** lesdits moyens d'évaluation (CEV) comprennent un circuit de test (CT) comprenant au moins un circuit sensible à la valeur de la tension d'alimentation et aux conditions d'environnement, recevant périodiquement un ou des stimuli (st) et fournissant au moins une réponse (rep) utilisée pour ajuster la tension d'alimentation jusqu'à une valeur minimale qui permette encore un fonctionnement correct dudit circuit électronique.

5. Système d'alimentation conforme à la revendication 1, **caractérisé en ce que** lesdits moyens d'évaluation (CEV) comprennent un dispositif DT) fournissant un signal d'évaluation représentant la température à laquelle est soumis ledit circuit électronique (CE) et un dispositif de conversion (TRT) traduisant ledit signal d'évaluation en un signal de commande (sd, sc) utilisé pour ajuster la tension d'alimentation jusqu'à une valeur minimale qui permette encore un fonctionnement correct dudit circuit électronique.

## Patentansprüche

1. Optimierte Stromversorgung für eine elektronische Schaltung, deren Spannungsversorgung von einem regelbaren Gleichspannungswandler aus einer Zelle oder aufladbaren Batterie geliefert wird, **dadurch gekennzeichnet, dass** innerhalb der elektronischen Schaltung elektronische Bewertungsvorrichtungen in der Weise vorgesehen sind, dass sie während des Betriebs der elektronischen Schaltung eine Angabe der Betriebsbedingungen der elektronischen Schaltung liefern, die zur Einstellung der Versorgungsspannung bis auf einen Mindestwert genutzt wird, der noch einen korrekten Betrieb dieser elektronischen Schaltung ermöglicht.

2. Stromversorgung nach Anspruch 1, **dadurch gekennzeichnet, dass** die elektronischen Bewertungsvorrichtungen einen Oszillator (OSC) umfassen, dessen Betriebsfrequenz (fe) die genannte Angabe liefert.

3. Stromversorgung nach Anspruch 2, **dadurch gekennzeichnet, dass** die Frequenz anschließend in ein entsprechendes Spannungssignal (te) umgewandelt wird, welches mit einem Sollwert (tc), der auch eine Spannung ist, verglichen wird, wobei das Ergebnis des Vergleichs (sc) zur Einstellung der Versorgungsspannung (ta1) bis auf einen Mindestwert genutzt wird, der noch einen korrekten Betrieb dieser elektronischen Schaltung ermöglicht.

4. Stromversorgung nach Anspruch 1, **dadurch gekennzeichnet, dass** die Bewertungsvorrichtungen (CEV) eine Testschaltung (CT) umfassen, die middestens eine Schaltung aufweist, welche gegenüber dem Wert der Versorgungsspannung und gegenüber den Umgebungsbedingungen empfindlich reagiert, die in periodischen Abständen einen oder mehrere Stimuli (st) empfängt und die mindestens eine Antwort (rep) liefert, die zur Einstellung der Versorgungsspannung bis auf einen Mindestwert genutzt wird, der noch einen korrekten Betrieb dieser elektronischen Schaltung ermöglicht.

5. Stromversorgung nach Anspruch 1, **dadurch gekennzeichnet, dass** die Bewertungsvorrichtungen (CEV) eine Vorrichtung (DT) umfassen, die ein Bewertungssignal liefert, welches für die Temperatur repräsentativ ist, der die elektronische Schaltung (CE) ausgesetzt ist, und eine Konvertierungsvorrichtung (TRT), die das Bewertungssignal in ein Steuersignal (sd, sc) umsetzt, das zur Einstellung der Versorgungsspannung bis auf einen Minimalwert genutzt wird, der noch einen korrekten Betrieb dieser elektronischen Schaltung ermöglicht.

## Claims

1. An optimized power supply system for an electronic circuit whose power supply voltage is delivered via a variable-voltage DC-to-DC voltage converter from a rechargeable battery or from a non-rechargeable battery, said power supply system being **characterized in that** electronic evaluation means are provided within the electronic circuit so as to deliver, while the electronic circuit is in operation, an indication of the operating conditions of the electronic circuit, which indication is used to adjust the power supply voltage to a minimum value at which said electronic circuit can still operate correctly.

2. A power supply system according to claim 1, **characterized in that** said electronic evaluation means comprise an oscillator (OSC) whose operating frequency (fe) delivers said indication.

3. A power supply system according to claim 2, **characterized in that** said frequency is then converted into a signal of corresponding voltage (te) which is compared with a reference value (tc) which is also a voltage, the result of said comparison (sc) being used to adjust the power supply voltage (ta1) to a minimum value at which said electronic circuit can still operate correctly.

4. A power supply system according to claim 1. **characterized in that** said evaluation means (CEV) comprise a test circuit (CT) comprising at least one circuit that is sensitive to the value of the power supply voltage and to the environmental conditions, the circuit periodically receiving one or more stimuli (st) and delivering at least one response (rep) used to adjust the power supply voltage to a minimum value at which said electronic circuit can still operate correctly.

5. A power supply system according to claim 1, **characterized in that** said evaluation means (CEV) comprise a device (DT) delivering an evaluation signal representing the temperature to which said electronic circuit (CE) is subjected, and a conversion device (TRT) converting said evaluation signal into a control signal (sd, sc) that is used to adjust the power supply voltage to a minimum value at which said electronic circuit can still operate correctly.
